# EUROPEAN PATENT SPECIFICATION

(11) **EP 3 866 592 B1**
(45) Date of publication and mention of the grant of the patent: **28.02.2024**
(21) Application number: 19794203.0
(22) Date of filing: 15.10.2019
(51) Int. Cl.: A01M 1/14

(54) **PEST TRAP**
SCHÄDLINGSFALLE
PIÈGE À NUISIBLES

(30) Priority: 18.10.2018 GB 201816994
(43) Date of publication of application: 25.08.2021
(73) Proprietor: Pelsis Limited, Grimbald Crag Close Knaresborough North Yorkshire HG5 8PJ (GB)
(72) Inventor: FISH, John, Yorkshire HG5 8PJ (GB)
(74) Representative: Appleyard Lees IP LLP
(86) International application number: PCT/GB2019/052929
(87) International publication number: WO 2020/079414

(56) References cited:
- EP-A1- 3 162 202
- EP-A1- 3 162 203
- CN-U- 207 070 770
- GB-A- 2 381 181
- KR-A- 20120 139 354
- US-A- 5 513 465
- US-A1- 2006 080 888
- US-A1- 2017 295 772
- US-A1- 2018 184 635

## Description

A flying pest trap typically comprises a housing containing an attracting element, such as an electrically powered light source that emits UV light (usually in addition to visible light) and an immobilisation element, such as a glue board. The glue board is a board carrying an adhesive that retains the pests when they make contact with the glue board. US 2018/184635 discloses a flying pest trap of this type.

The flying pest trap functions by attracting flying pests, such as insects including various types of fly and moth, to the light source. When in the vicinity of the light source the pest will explore the area and come into contact with the glue board and thereby become immobilised.

Traditional fluorescent UV tubes emit both heat, and by definition UV. UV is commonly used within curing industries to hasten the curing/drying of a range of non solid materials, including ink, paint and liquids. When UV tubes are positioned in front of a glue board, the glue prematurely dries out. This leaves the glue board, and therefore the pest device, unable to function. Recently, there has been a desire to replace the traditional fluorescent UV lighting tubes that act as the attracting element with LED light sources. The LED light sources advantageously consume less power, and have a longer lifetime in optimal conditions. A challenge arises in maximising the amount of light provided by the LEDs that exits the trap.

It is an aim of the present invention to address the above-mentioned disadvantages, and any other disadvantages that may be apparent to the skilled person from the description herein.

According to the present invention there are provided apparatuses and methods as set forth in the appended claims. Other features of the invention will be apparent from the dependent claims, and the description which follows.

According to a first aspect of the invention there is provided a flying pest trap comprising a plurality of LEDs and an immobilisation element retaining means for retaining an immobilisation element in a non-planar configuration.

The immobilisation element retaining means may be configured to retain the immobilisation element in a configuration wherein openings in the immobilisation element align with the LEDs. Light emitted from the LEDs may thereby be emitted through the openings in the immobilisation element.

Over time, an immobilisation element tends to bow, caused by heating of the immobilisation element by the light source. Additionally, depending on the substrate used within the glue board, for example cardboard, the substrate may attempt to return to its native state of being coiled upon a card roll, as when it was first manufactured. The closer that the substrate was to the centre of the roll and therefore the smaller the radius of the coil, the worse this bowing can be. If the immobilisation element is inserted into the flying pest trap to be substantially planar, with the openings in the immobilisation element aligning with the LED light sources, over time the immobilisation element will bow and the openings in the immobilisation element will lose alignment with the LED light sources. This can reduce the amount of light passing through the openings in the immobilisation element, which can significantly reduce the efficacy of the flying pest trap. Furthermore, as the immobilisation element warps, the openings in the immobilisation element may move away from the light sources, which can reduce the amount of light passing through the openings, and reduce the efficacy of the flying pest trap.

The feature of the retaining means being configured to retain the immobilisation element in a non-planar configuration provides the advantage that immobilisation element is inhibited from deforming over time, and so the LEDs can remain in alignment with the openings in the immobilisation section over the lifetime of the glue board. Light emitted through the openings can therefore be maximised, without requiring the size of the openings to be enlarged. The surface area of the adhesive on the glue board is therefore also maximised.

The immobilisation element retaining means may be configured to retain the immobilisation element in a curved configuration. The non-planar configuration may be wholly curved, or may comprise one or more curved sections.

The trap may comprise a housing. A rear portion of the housing may comprise a front surface. At least part of the front surface of the housing may be non-planar, and preferably curved. The entirety of the front surface of the rear portion may be curved. The curved front surface or the part thereof of the rear portion may maintain the immobilisation element in the curved configuration. In use, the immobilisation element may be provided adjacent the front surface of the rear portion.

The immobilisation element retaining means comprises at least one rail, preferably two rails. A first of the two rails may be provided at a first side of the rear portion of the housing and second of the two rails may be provided at a second side of the rear portion. Preferably, the first and second sides of the rear portion are left and right sides of the housing when the flying pest trap is in an orientation for normal use. Alternatively the first and second rails may be provided at respective top and bottom sides of the housing.

The at least one rail defines a slot. The slot may be between a region of a front surface of the rear portion of adjacent the rail and the rail. The slot may be non-linear, preferably curved. The slot receives an edge of the immobilisation element.

The at least one rail is non-linear, to hold the immobilisation element in the non-planar configuration. The region of the front surface of the rear portion adjacent the rail may be correspondingly non-planar, such that the slot is non-linear. Preferably, the at least one rail and the region of the front surface of the rear portion adjacent the rail may be curved, such that the slot is curved.

The immobilisation element retaining means may comprise a first securing means to secure a first edge of the immobilisation element and a second securing means to secure a second, opposing edge of the immobilisation element. The first securing means and the second securing means may be separated by a distance shorter than a height of the immobilisation element, between the first edge and the second edge. Securing a first edge of the immobilisation element with the first securing means and a second edge of the immobilisation element with the second securing means may force the immobilisation element to deform into a curved configuration, due to the separation of the securing means being smaller than the height of the immobilisation element. The first and second securing means may be provided at respective upper and lower portions of the front surface of the rear portion, for securing respective upper and lower edges of the immobilisation element.

The first and second securing means may be two rails that may be substantially straight. The two rails may be provided at respective upper and lower portions of the front surface and may define upper and lower straight slots provided between the rails and the upper and lower portions of the front surface. The rails may be separated by a distance shorter than the height of the immobilisation element. Inserting edges of the immobilisation element into the opposing slots may force the immobilisation element to deform into a curved configuration, due to the separation distance of the rails being smaller than the height of the immobilisation element.

The trap may comprise at least one attracting element. The at least one attracting element may comprise the plurality of LEDs and a support section. The LEDs may be arranged on a surface of the support section in an array, preferably in a linear array. The LEDs arranged on the surface of the attracting element may be disposed at regular intervals along a length of the attracting element. Preferably, the trap comprises two attracting elements.

A first attracting element may be provided in an upper part of the front surface of the rear portion of the housing. A second attracting element may be provided in a lower part of the front surface of the rear portion of the housing. The first and second attracting elements may be provided forward of a central portion of the front surface of the rear portion, due to curvature of the front surface of the rear portion. The front surface of the rear portion of the housing being curved advantageously positions the rows of attracting elements in close proximity to openings in the immobilisation element, thereby increasing the proportion of light emitted from the LEDs that passes through the openings in the immobilisation element.

The immobilisation element retaining means may comprise one or more fasteners. The fasteners may be hooks or clips that may be arranged to retain an edge of an immobilisation element.

According to an aspect not part of the invention there is provided an immobilisation element for a flying pest trap, the immobilisation element comprising a plurality of openings therein for passage of light from a rear side of the immobilisation element to a front side of the immobilisation element, and the immobilisation element being adapted to be retained in a flying pest trap in a non-planar configuration, wherein the immobilisation element is flexible.

The immobilisation element may adapted to be retained in a curved configuration.

The immobilisation element may be biased in a curved configuration.

The plurality of openings may be provided in a first row of openings and a second row of openings. The first and second rows of openings may be substantially parallel to each other. The separation between the first and second rows of openings on the immobilisation element may be greater than a vertical separation of first and second rows of LEDs on the flying pest trap. When the immobilisation element is retained in the non-planar configuration, a portion of the immobilisation element between the first and second rows of openings may be deformed to be non-planar, such that the vertical separation between the first and second rows corresponds to the vertical separation of the first and second rows of LEDs on the flying pest trap. This may allow the openings to align with the LEDs in use, to maximise the amount of light that passes through the openings.

The immobilisation element may comprise an adhesive. The adhesive may be provided on a major surface of the immobilisation element. The major surface of the immobilisation element on which the adhesive may be provided may be a forward-facing surface of the immobilisation element, in use. The adhesive may be provided on part of or the entirety of the major surface of the immobilisation element.

The flying pest trap of the first aspect of the invention may comprise the immobilisation element as described above.

According to a second aspect of the invention there is provided a kit of parts comprising a flying pest trap and an immobilisation element.

The flying pest trap may comprise any or any combination of the features of the flying pest trap described in relation to the first aspect of the invention.

The immobilisation element may comprise any or any combination of features described above in relation to the second aspect of the invention.

According to a third aspect of the invention there is provided a method of operating a flying pest trap, the flying pest trap comprising a plurality of LEDs, the method comprising inserting an immobilisation element into the flying pest trap and retaining the immobilisation element in the flying pest trap in a non-planar configuration.

The immobilisation element may comprise a plurality of openings. The openings in the immobilisation element may align with the LEDs in the flying pest trap.

According to a fourth aspect of the invention there is provided use of an immobilisation element in a flying pest trap in a non-planar configuration.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1 shows a front view of an example of a flying pest trap;
Figure 2 shows a rear view of the flying pest trap;
Figures 3A and 3B show side view of the flying pest trap;
Figure 4 shows a perspective view of the flying pest trap;
Figure 5 shows a perspective view of the flying pest trap with an immobilisation element partly inserted; and
Figure 6 shows a flying pest trap without an immobilisation element.

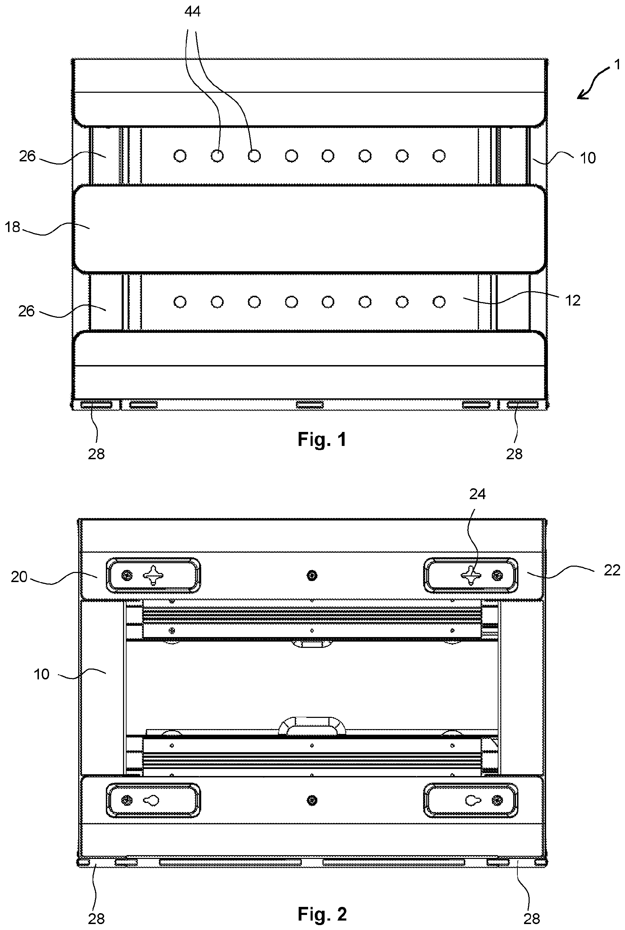

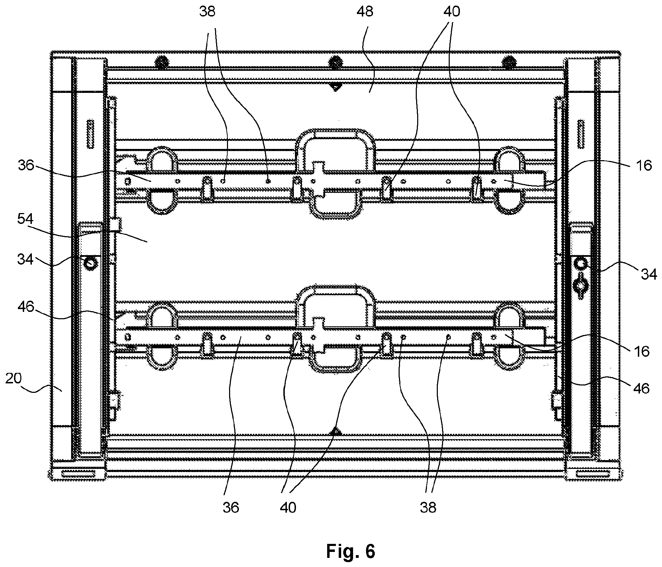

Figures 1-6 show an example of a flying pest trap system 1 comprising a flying pest trap 10 and an immobilisation element 12.

The flying pest trap 10 comprises a housing 14 and two attracting elements 16. The housing 14 forms a casing or enclosure configured to support the immobilisation element 12 and the attracting elements 16.

The housing 14 comprises a front portion 18 and a rear portion 20. The rear portion 20 is configured to be secured to a wall or other surface. The rear portion 20 comprises a mounting portion 22 provided on a rear side of the rear portion 20, as shown in figure 2. The mounting portion 22 comprises holes 24 arranged to receive bolts, screws or other fixing means for securing the rear portion to a wall or for mounting to a mounting bracket.

The front portion 18 forms at least part of a front wall of the housing 14 and defines two apertures 26 for the egress of light from the attracting elements 16, so that flying pests may be lured to the flying pest trap system 1. Furthermore, the apertures 26 may allow the ingress of flying pests to the trap system 1, so that the flying pests may come into contact with the immobilisation element 12. The apertures 24 each take the form of horizontal elongate slots. It is known that flying pests are more attracted to horizontally orientated light sources, and therefore these horizontal elongate slots convey the impression of a horizontal light source to the flying pest.

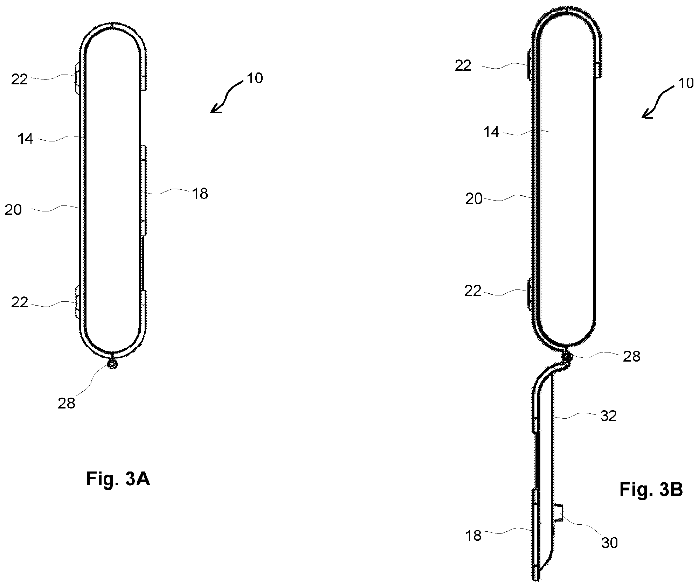

As shown in figures 3A and 3B, the front portion 18 is hingedly connected to the rear portion 20, so that the housing 14 can be opened to allow access to the interior thereof. The front portion 18 is pivotably mounted along a lowermost edge of the housing 14, so that the front portion 18 is arranged to pivot downwards and forwards in order to open. Accordingly, the housing 14 comprises hinges 28 formed on the lowermost edge of the housing 14.

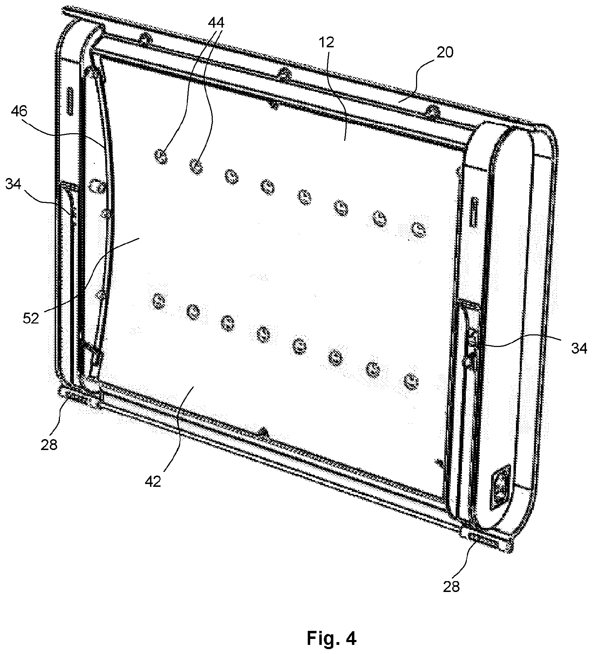

The housing 14 comprises suitable means for securing the front portion 18 in the closed position. The front portion 18 comprises latches 30 provided at opposing sides of the front portion 18, on an inside surface 32 of the front portion 18. The rear portion 20 comprises complementary receivers 34 for receiving the latches 30, the receivers 34 provided at opposing side of the rear portion 20, as shown in figure 4. Other means for securing the front portion 18 in the closed position may be employed, for example clips or nuts and bolts, or the hinges 28 may be friction hinges, which allow the rotation of the front portion when a force is applied by a user, but are adapted so as to retain the front portion 18 in position once the user releases the front portion 18.

The flying pest trap 10 comprises two attracting elements 16, which are disposed at positions corresponding to the apertures 26 in the front portion 18. Each attracting element 16 comprises an elongate strip 36. A plurality of LEDs 38 are provided on the strip 36. The LEDs 38 are configured to emit UV light. The LEDs 38 are disposed on the strip at regular intervals along the longitudinal axis thereof. The elongate strip 36 of each attracting element 16 comprises a printed circuit board (PCB) connecting the LEDs 38. Each attracting element 16 comprises eight LEDs 38. However, other exemplary attracting elements may comprise more or fewer than eight LEDs.

The attracting elements 16 are removable from the housing 14. Each attracting element 16 comprises electrical contacts (not shown), disposed at an end of the elongate strip 36 and for coupling to corresponding electrical contacts (not shown) provided in the housing 14. The housing 14 comprises a power supply (not shown), and so the attracting element 16 may receive electrical power from the housing 14 through the electrical contacts. Power received at the electrical contacts of the attracting element 16 is supplied to the LEDs 38 to illuminate the LEDs 38.

The trap 10 comprises a plurality of resiliently deformable spring clips 40 for removably securing the attracting elements 16 to the housing 14.

The flying pest trap system 1 comprises an immobilisation element 12, which is insertable and removable from the flying pest trap 10. The immobilisation element 12 takes the form of a glue board. The immobilisation element 12 comprises a forward facing surface 42, with an adhesive provided on the forward facing surface 42. The adhesive is configured to retain the pests when they make contact with the immobilisation element 12.

The immobilisation element 12 comprises a plurality of holes 44 formed through the immobilisation element 12. The holes 44 are configured to allow light emitted from the attracting elements 16 to pass through. The holes 44 are formed in two rows that extend horizontally across the immobilisation element 12. Each row of holes 44 is arranged to coincide with the position of a respective attracting element 16 in the trap 10 and a respective aperture 26 in the front portion 18 of the housing 14.

The immobilisation element 12 is detachably securable to the trap 10, so that the immobilisation element 12 can be removed from the trap 10 to be replaced when the immobilisation element 12 has become saturated with flying pests.

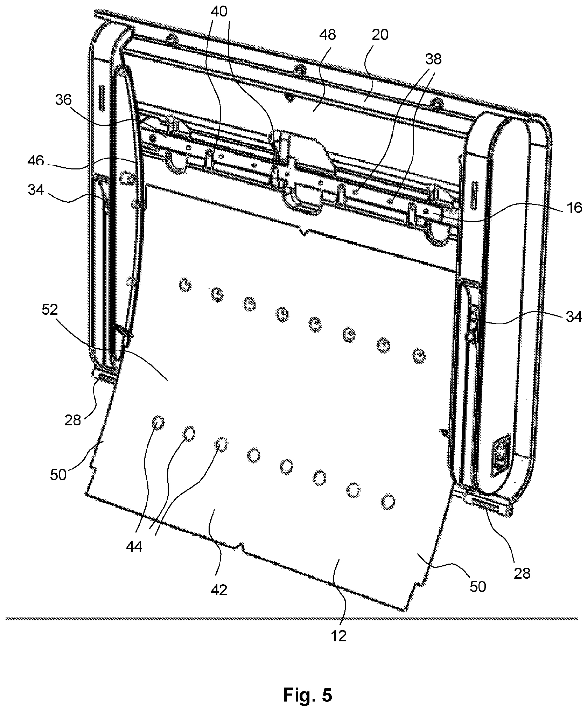

The trap 10 comprises retaining means for retaining the immobilisation element 12 within the trap 10. The retaining means are rails 46 provided at a left side and a right side of the front surface 48 of the rear portion 20 of the housing 14. A space is provided between the rails 46 and the front surface 48 of the housing, defining a slot in which an edge 50 of the immobilisation element 12 is insertable, as shown in figure 5.

The rails 46 are curved for retaining the immobilisation element 12 in a curved configuration in the trap 10. The front surface 48 of the rear portion 20 of the housing 14 is correspondingly curved.

As shown in figure 5, the immobilisation element 12 may be inserted into the trap 10 by sliding the immobilisation element 12, such that the edges 50 of the immobilisation element 12 are provided within the slot between the rails 46 and the front surface 48 of the rear portion 18. The immobilisation element 12 is thereby held in a curved configuration, wherein a central portion 52 of the immobilisation element is further from the inside surface 32 of the front portion 18 than the upper and lower edges of the immobilisation element 12.

The immobilisation element 12 is flexible. The immobilisation element 12 is biased in a curved configuration. For example, the immobilisation element may be inherently biased into a curved configuration due to how the immobilisation element is manufactured or stored before being inserted into the trap. When the immobilisation element is inserted into the trap, the upper and lower ends of the edges 50 press against the rails while a central part 52 of the immobilisation element 12 presses against the central part 54 of the front surface 48 of the rear portion 20 of the housing 14, due to the biasing nature of the immobilisation element 12. The immobilisation element 12 may thereby be retained in the trap 10.

The invention is not restricted to the details of the foregoing embodiment(s). The invention is defined by the appended claims.

## Claims

1. A flying pest trap comprising a plurality of LEDs and an immobilisation element retaining means for retaining an immobilisation element in a non-planar configuration,
wherein the immobilisation element retaining means comprises at least one curved rail, the curved rail defining a slot between a surface of the flying pest trap and the curved rail, the slot receiving an edge of the immobilisation element

2. The flying pest trap according to claim 1, wherein the immobilisation element retaining means is configured to retain the immobilisation element in a configuration wherein openings in the immobilisation element align with the LEDs.

3. The flying pest trap according to claim 1 or claim 2, wherein the immobilisation element retaining means is configured to retain the immobilisation element in a curved configuration.

4. The flying pest trap according to any preceding claim, wherein the surface of the flying pest trap is curved.

5. A kit of parts comprising a flying pest trap and an immobilisation element, the flying pest trap comprising a plurality of LEDs and an immobilisation element retaining means,
wherein the immobilisation retaining means is configured to retain the immobilisation element in the trap in a non-planar configuration,
wherein the immobilisation element retaining means comprises at least one rail, the rail defining a slot between a surface of the flying pest trap and the rail, the slot being for receiving an edge of the immobilisation element, and
wherein the rail is curved.

6. A method of operating a flying pest trap comprising inserting an immobilisation element into the flying pest trap and retaining the immobilisation element in an immobilisation element retaining means of the flying pest trap in a non-planar configuration,
wherein the immobilisation element retaining means comprises at least one rail, the rail defining a slot between a surface of the flying pest trap and the rail, the slot being for receiving an edge of the immobilisation element, and
wherein the rail is curved.

7. The method according to claim 6, wherein the flying pest trap comprises a plurality of LEDs and the immobilisation element comprises a plurality of openings, wherein inserting the immobilisation element into the flying pest trap comprises aligning the openings in the immobilisation element with the LEDs in the flying pest trap.

8. Use of an immobilisation element in a flying pest trap as claimed in any one of claims 1 to 4 in a non-planar configuration.

## Patentansprüche

1. Flugschädlingsfalle, mehrere LEDs und ein Immobilisationselement-Befestigungsmittel zum Halten eines Immobilisationselements in einer nichtplanaren Konfiguration umfassend,
wobei das Immobilisationselement-Befestigungsmittel mindestens eine gekrümmte Schiene umfasst, wobei die gekrümmte Schiene einen Schlitz zwischen einer Oberfläche der Flugschädlingsfalle und der gekrümmten Schiene definiert, wobei der Schlitz einen Rand des Immobilisationselements aufnimmt.

2. Flugschädlingsfalle nach Anspruch 1, wobei das Immobilisationselement-Befestigungsmittel eingerichtet ist, um das Immobilisationselement in einer Konfiguration zu halten, wobei Öffnungen in dem Immobilisationselement mit den LEDs ausgerichtet sind.

3. Flugschädlingsfalle nach Anspruch 1 oder 2, wobei das Immobilisationselement-Befestigungsmittel eingerichtet ist, um das Immobilisationselement in einer gekrümmten Konfiguration zu halten.

4. Flugschädlingsfalle nach einem der vorhergehenden Ansprüche, wobei die Oberfläche der Flugschädlingsfalle gekrümmt ist.

5. Kit aus Teilen, eine Flugschädlingsfalle und ein Immobilisationselement umfassend, wobei die Flugschädlingsfalle mehrere LEDs und ein Immobilisationselement-Befestigungsmittel umfasst,
wobei das Immobilisationselement-Befestigungsmittel eingerichtet ist, um das Immobilisationselement in der Falle in einer nichtplanaren Konfiguration zu halten,
wobei das Immobilisationselement-Befestigungsmittel mindestens eine Schiene umfasst, wobei die Schiene einen Schlitz zwischen einer Oberfläche der Flugschädlingsfalle und der Schiene definiert, wobei der Schlitz zum Aufnehmen eines Rands des Immobilisationselements dient und
wobei die Schiene gekrümmt ist.

6. Verfahren zum Betreiben einer Flugschädlingsfalle, Einführen eines Immobilisationselements in die Flugschädlingsfalle und Halten des Immobilisationselements in einem Immobilisationselement-Befestigungsmittel der Flugschädlingsfalle in einer nichtplanaren Konfiguration umfassend,
wobei das Immobilisationselement-Befestigungsmittel mindestens eine Schiene umfasst, wobei die Schiene einen Schlitz zwischen einer Oberfläche der Flugschädlingsfalle und der Schiene definiert, wobei der Schlitz zum Aufnehmen eines Rands des Immobilisationselements dient und
wobei die Schiene gekrümmt ist.

7. Verfahren nach Anspruch 6, wobei die Flugschädlingsfalle mehrere LEDs umfasst und das Immobilisationselement mehrere Öffnungen umfasst, wobei Einführen des Immobilisationselements in die Flugschädlingsfalle Ausrichten der Öffnungen in dem Immobilisationselement mit den LEDs in der Flugschädlingsfalle umfasst.

8. Verwenden eines Immobilisationselements in einer Flugschädlingsfalle nach einem der Ansprüche 1 bis 4 in einer nichtplanaren Konfiguration.

## Revendications

1. Piège à nuisibles volants comprenant une pluralité de DEL et un moyen de retenue d'élément d'immobilisation pour retenir un élément d'immobilisation dans une configuration non plane,
le moyen de retenue d'élément d'immobilisation comprenant au moins un rail incurvé, le rail incurvé définissant une fente entre une surface du piège à nuisibles volants et le rail incurvé, la fente recevant un bord de l'élément d'immobilisation.

2. Piège à nuisibles volants selon la revendication 1, dans lequel le moyen de retenue d'élément d'immobilisation est configuré pour retenir l'élément d'immobilisation dans une configuration dans laquelle des ouvertures dans l'élément d'immobilisation s'alignent avec les DEL.

3. Piège à nuisibles volants selon la revendication 1 ou la revendication 2, dans lequel le moyen de retenue d'élément d'immobilisation est configuré pour retenir l'élément d'immobilisation dans une configuration incurvée.

4. Piège à nuisibles volants selon l'une quelconque des revendications précédentes, dans lequel la surface du piège à nuisibles volants est incurvée.

5. Kit de pièces comprenant un piège à nuisibles volants et un élément d'immobilisation, le piège à nuisibles volants comprenant une pluralité de DEL et un moyen de retenue d'élément d'immobilisation,
le moyen de retenue d'immobilisation étant configuré pour retenir l'élément d'immobilisation dans le piège dans une configuration non plane,
le moyen de retenue d'élément d'immobilisation comprenant au moins un rail, le rail définissant une fente entre une surface du piège à nuisibles volants et le rail, la fente étant destinée à recevoir un bord de l'élément d'immobilisation, et
le rail étant incurvé.

6. Procédé de fonctionnement d'un piège à nuisibles volants comprenant l'insertion d'un élément d'immobilisation dans le piège à nuisibles volants et la retenue de l'élément d'immobilisation dans un moyen de retenue d'élément d'immobilisation du piège à nuisibles volants dans une configuration non plane,
le moyen de retenue d'élément d'immobilisation comprenant au moins un rail, le rail définissant une fente entre une surface du piège à nuisibles volants et le rail, la fente étant destinée à recevoir un bord de l'élément d'immobilisation, et
le rail étant incurvé.

7. Procédé selon la revendication 6, dans lequel le piège à nuisibles volants comprend une pluralité de DEL et l'élément d'immobilisation comprend une pluralité d'ouvertures, dans lequel l'insertion de l'élément d'immobilisation dans le piège à nuisibles volants comprend l'alignement des ouvertures dans l'élément d'immobilisation avec les DEL dans le piège à nuisibles volants.

8. Utilisation d'un élément d'immobilisation dans un piège à nuisibles volants selon l'une quelconque des revendications 1 à 4 dans une configuration non plane.
